# EUROPEAN PATENT SPECIFICATION

(11) **EP 3 483 612 B1**
(45) Date of publication and mention of the grant of the patent: **22.09.2021**
(21) Application number: 18205254.8
(22) Date of filing: 08.11.2018
(51) Int. Cl.: G01N 35/04, G01N 35/00, B65G 51/04

(54) **IDENTIFYING, SORTING AND MANIPULATING TEST TUBES**
IDENTIFIZIEREN, SORTIEREN UND MANIPULIEREN VON REAGENZGLÄSERN
IDENTIFICATION, TRI ET MANIPULATION DE TUBES D'ESSAI

(30) Priority: 10.11.2017 SE 1751394
(43) Date of publication of application: 15.05.2019
(73) Proprietor: Graniten Group AB, 451 76 Uddevalla (SE)
(72) Inventor: OLSSON, Jan-Olof, 451 42 Uddevalla (SE); ERIKSSON, Karl Olof, 451 32 Uddevalla (SE)
(74) Representative: AWA Sweden AB

(56) References cited:
- WO-A1-2011/078762
- GB-A- 1 323 530
- US-A- 6 062 398
- US-A1- 2010 312 379
- US-A1- 2013 123 089
- US-A1- 2013 322 992
- US-B1- 6 173 212

## Description

### TECHNICAL FIELD

The present technique generally concerns the handling of test tubes containing samples in connection with their conveying from a sampling location, such as by a medical service or in a pharmaceutical or industrial application, and to a test tube sample testing and analyzing location, such as a laboratory.

### BACKGROUND

In certain areas, such as for the above exemplified medical, pharmaceutical and/or industrial applications, larger quantities of different types and kinds of samples may be sampled at distinct and separated locations. The different test tubes with their individual samples are mostly collected and gathered at each location and jointly conveyed further to testing and analyzing locations. In order to enable a secure separation of test tubes that are associated with each other for any of various reasons, such as sample type or sample composition or sampling location etc., it is possible to convey or transport such associated test tubes together to the testing and analyzing location. This will however require a considerable amount of manual as well as logistic effort, with associated significant costs.

As an alternative, sample test tubes that have all been conveyed jointly to a testing and analyzing location may in the past have been manually sorted in accordance with various criteria at the testing and analyzing location. Obviously such a manual sorting of test tubes will also be very costly.

In the published US patent application US 2010/0312379 A1, an apparatus adapted to automatically load and unload biological material test tubes into and from a capsule suitable for the handling in a pneumatic mail system is described., The test tubes are supported by a test tube container which may be removably accommodated in the capsule. The apparatus comprises a loading and unloading interface included in a conveyor adapted to automatically transport biological material test tubes, a receiving/dispatching station or capsules to/from various biological material collection departments and a receiving/dispatching station for capsules to/from biological material testing departments, devices adapted to handle arriving test tube containers and test tubes to be dispatched to a bench comprising a loading area and an unloading area for test tubes and test tube containers, arriving material identifying and checking devices, orienting devices for test tube containers, and a control unit adapted to coordinate said devices during the loading and unloading operations.

In the published US patent application US 2013/0322992 A1, an interface apparatus between a pneumatic mail system and a feeding system of biological products to a laboratory automation system is described. The apparatus comprises a capsule suitable for being conveyed in a pneumatic mail system which accommodates therein one or more biological material containers. The capsule opening and connecting to a device for transferring the biological material containers contained in the capsule into at least one recruiting device of the biological product containers. The at least one recruiting device being used to load the containers of biological products into a positioning device interfaced with a gripping device of the biological product container for transferring the biological product container on an automatic conveyor belonging to a laboratory automation system. The capsule has an inner chamber containing foam elements adapted to withhold the biological product containers present in the capsule.

In the published US patent US 6,173,212 B1, a method and apparatus for the automatic receipt and distribution of products, such as parenteral products from a hospital pharmacy or specimen from a laboratory, through a pneumatic tube transport system, is disclosed. The system of the present invention includes a method and apparatus for the automatic receipt of a pneumatic tube carrier, the automatic opening of the carrier, the loading of a product into the carrier, the automatic closing of the carrier, and the automatic distribution of the carrier into a pneumatic tube transport system.

In the published international patent application WO 2011/078762 A1, a device for automatic handling of objects suitable for transport by pneumatic tube transport systems is disclosed. A device includes a loading station for the automatic filling of cylindrical capsules with objects that have given addresses. The capsules are intended for pneumatic tube transport systems and include two openable end pieces and a transponder with readable information about each individual capsule's identity. The loading station includes a gripping device and a transfer unit, via which latter the gripping device can be automatically moved, relative to a capsule, in a first direction in through the capsule's first end piece opening and grip an object through the second end piece opening of the capsule before then moving, relative to the capsule, in a second direction, thereby pulling the object into the capsule through its second end piece opening, the gripping device then being able to release the object inside the capsule and then move, relative to the capsule, out of the letter's first end piece opening.

In the published US patent application US 2013/0123089 A1, systems, methods and apparatus are described for a centrifuge module of a laboratory analysis system. Specimen containers may be weighed, loaded into a centrifuge adapter, and transported to a centrifuge module by an adapter shuttle. A centrifuge adapter gripper may transport the centrifuge adapter into a centrifuge for centrifugation. The centrifuge adapter may be transported by the centrifuge adapter gripper to an adapter shuttle for unloading of the specimen containers, which may be performed by a specimen container gripper. A centrifuge drawer that allows a centrifuge to be extended from its installed position is also described. Additional embodiments pertain to a sequence for replacing, in a centrifuge, a set of centrifuge adapters that have been centrifuged with a set of centrifuge adapters that have not been centrifuged. A sequence for loading specimen containers into centrifuge adapters is also described.

### SUMMARY

It is a general object of the present technique to eliminate the above discussed problems within the field of handling sample test tubes.

In particular it is an object to suggest an improved method of managing test tubes.

In particular it is another object to suggest an improved test tube managing system.

These and other objects are met by the present technique as defined by the accompanying claims.

In a first aspect a method of managing test tubes is defined in claim 1.

In accordance with a further aspect, a test tube managing system is defined in claim 5.

Preferred further developments of the basic idea of the present technique as well as embodiments thereof are specified in the dependent subclaims.

Advantages offered by the present technique, in addition to those described above, will be readily appreciated upon reading the below detailed description of embodiments.

### BRIEF DESCRIPTION OF THE DRAWINGS

The present technique and its further objects and advantages will be best understood by reference to the following description taken together with the accompanying drawings, in which:
- Fig. 1: is a schematical perspective view of an exemplary embodiment of a test tube managing system according to the present technology;
- Figs. 2A-2B: are schematical illustrations of components of a carrier infeed station;
- Fig. 3: is a schematical perspective view of a carrier transfer unit;
- Fig. 4: is a detail view of a sample test tube pusher unit;
- Fig. 5: is a schematical illustration of components of a carrier outfeed station;
- Fig. 6: is a schematical detail view of a part of a sample test tube conveying unit;
- Fig. 7: is a schematical perspective view of a test tube managing station; and
- Fig. 8: is a schematic flow diagram of a method of operating a sample test tube managing system according to the present technology.

### DETAILED DESCRIPTION

The technology will now be explained with reference to exemplifying embodiments of the technology as schematically illustrated in the accompanying drawings 1-8. These embodiments of the present technology relate to an application of the technology to a general medical service. However, it is emphasized that the present technology is equally well suited for application in other environments and for other types of installations including pharmaceutical as well as general industrial installations involving the sampling of various kinds of samples that are collected for analyze and test purposes. It is therefore emphasized that the illustrations are provided for the sole purpose of schematically describing a preferred embodiment and are not intended to limit the technology to details or to any specific field of application. Arrangements illustrated in the drawing figures are given as examples of an environment where the present technology may be applied.

As discussed above, previous solutions for handling test tubes containing collected samples between a sampling location and an analyzing and testing facility have been rather labor intensive and time consuming and thereby quite expensive. The present technology attempts to find an effective and practical solution in an effort to optimizing such handling of sample test tubes between sampling and sample analyzing locations and for various applications. This is done by taking a new approach for controlling the sorting of such sample test tubes. The object is to provide a practical, simple and thereby economical solution that will contribute to achieving an effective collecting, identifying, sorting and manipulating of such sample test tubes so that they may be securely and effectively distributed from sampling locations and to their respective designated testing and analyzing locations.

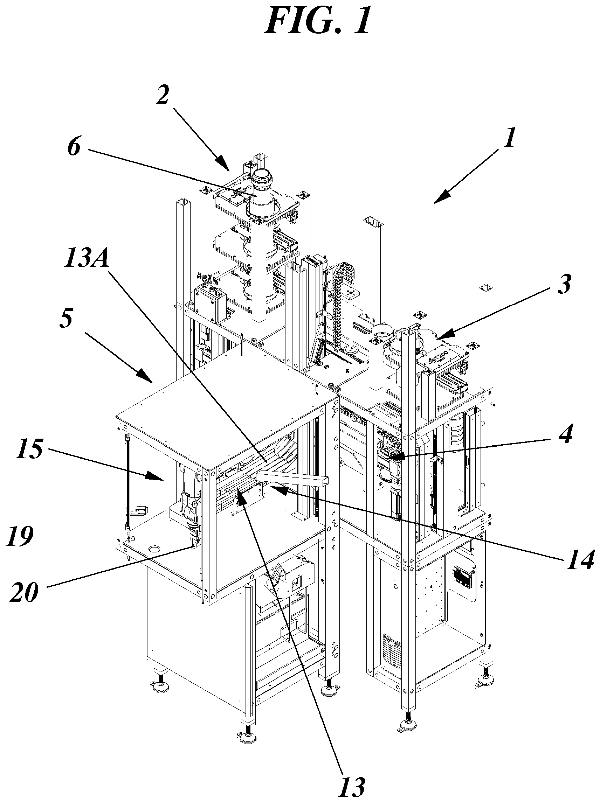

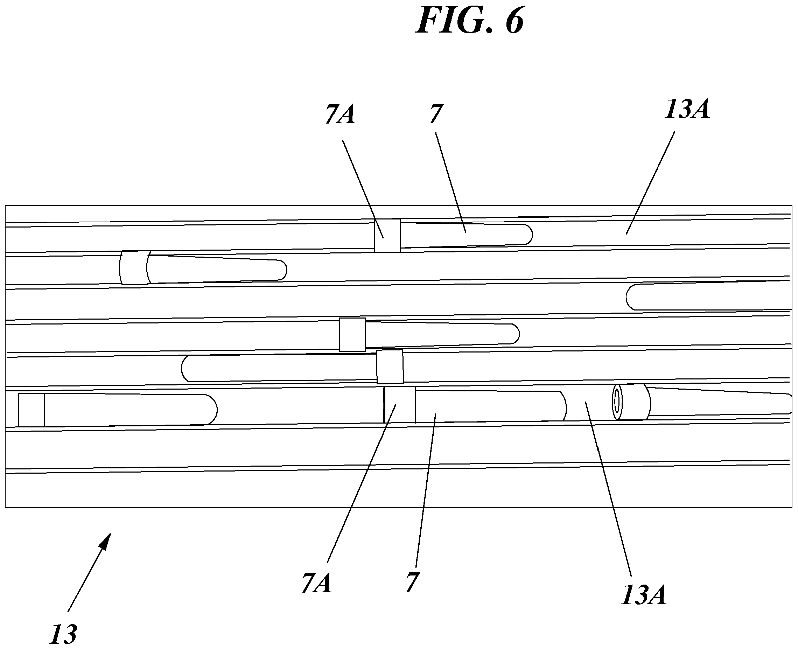

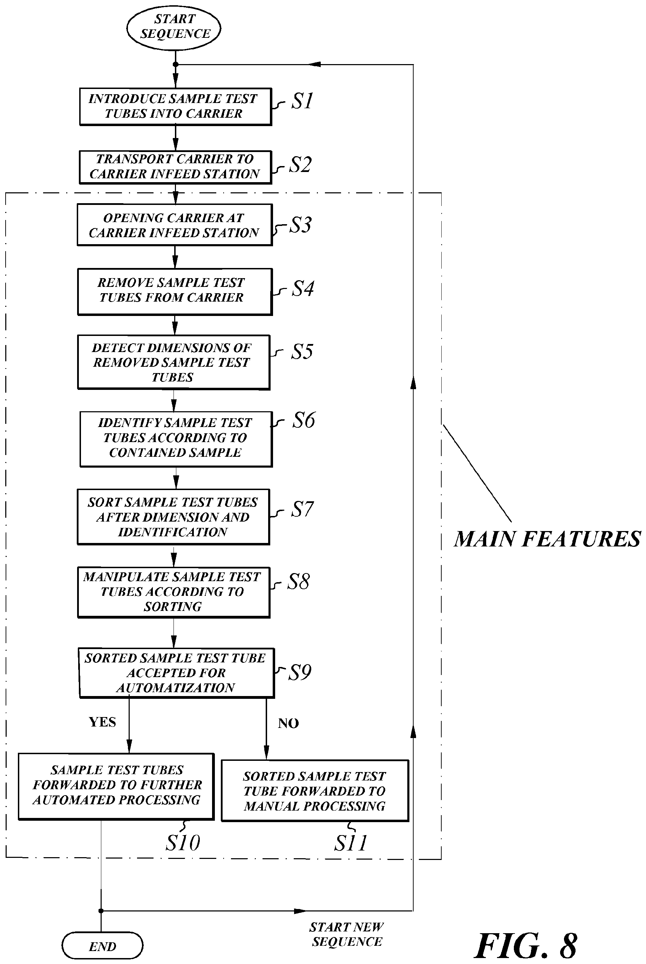

In the schematic flow diagram of Fig. 8 is generally illustrated a method of managing sample test tubes 7 (Fig. 6) between sampling and sample analyzing locations (not shown). One or more test tubes 7 containing samples are introduced into and collected in a carrier 6 in step S1 and are in step S2 pneumatically transported to a carrier infeed station 2 of a test tube managing system 1 (Fig. 1). In accordance with the present technology a solution is presented where carriers 6 that have been pneumatically transported to the test tube managing system 1 are opened at the carrier infeed station 2 in step S3. In the following method step S4 collected test tubes 7 are removed from the carrier 6, preferably by being ejected (or pushed out) therefrom.

In steps S5 and S6 each removed sample test tube 7 is analyzed to verify that the sample test tubes 7 ejected from the carriers 6 are allowed to pass directly to an automated processing. For this to be possible a number of criteria must be met, which are detectable by visually looking at the sample test tubes 7. Specifically, in step S5 a detection of the dimensions of the sample test tubes 7 as well as of their caps 7A, specifically diameter and length of test tubes and diameter of their caps, is performed. This vision detection and analysis is preferably done with a vision camera and the appropriate software, such as a PC-based system.

In step S6 each test tube 7 is then identified according to a sample contained therein and/or a sampling location thereof. Thereby a second analysis is performed to verify some or all of the following parameters that may be used to identify the sample contained in the individual sample test tubes 7. Said parameters may include some type of marking, such as a specified color of the cap 7A of each sample test tube 7; a color on top of a cap 7A; a color at the bottom of the sample test tube 7; or a barcode number attached to a surface of the sample test tube 7. The values of each of such selected parameters/markings will be compared to a list with criteria that must be met to decide that individual sample test tubes 7 are accepted for advancement to further automated processing, such as laboratory automation.

In step S7, following the detection in steps 5 and 6 the sample test tubes 7 are sorted after dimensions and identification/marking. In step S8 the sample test tubes 7 are manipulated for further processing according to said sorting. As a result of said sorting and manipulation, it is determined in step S9 whether individual sample test tubes are accepted for automatization or not. Sample test tubes 7 that are accepted for automatization are then forwarded in step S10 to further automated processing, such as laboratory automation, whereas sample test tubes 7 that are not accepted for automatization are forwarded to manual processing in step S11.

In a preferred embodiment of the suggested method sample test tubes 7 are transported in a well-known pneumatic pipe system from test tube sampling locations and to a test tube sample test location, none of which are shown in detail since they may be of any well-known configuration. Thereby, one or more test tubes 7 containing individual samples are collected in a carrier 6 at a carrier loading station/test tube collection station (likewise not shown in the drawings) and the carrier 6 with test tubes 7 is transported in the pneumatic pipe system to the carrier infeed station 2. Subsequently, each sample test tube 7 is ejected from the carrier 6 and moved by means of a conveyor unit 13 to a test tube identifying and analyzing unit 14.

In the preferred embodiment said conveyor 13 is a shake conveyor with grooves 13A receiving the ejected sample test tubes 7. Furthermore, the ejected sample test tubes 7 are picked up from the conveyor 13 by an industrial robot 19, guided by vision, and scanned for dimensional detection in the test tube identifying and analyzing station 14. The sample test tubes 7 with designated caps 7A that have correct dimensions and that are therefore accepted with regard to said dimensions, are then analyzed in said step S5. Thereby each sample test tube 7 is identified to determine whether it is to be forwarded directly to a laboratory automation test tube sample test and analyzing location or to a bin (not shown) for manual handling. By said identification a selected parameter/marking, as indicated above, on the test tube 7 and/or its cap 7A is identified to determine how the test tube shall be manipulated for further processing. As briefly mentioned above such a sample test tube 7 parameter/marking may be chosen from one or more of the test tube cap 7A color, the color of the top of the cap, the color at a bottom of the test tube 7, readability of a test tube barcode and/or the information of such a barcode.

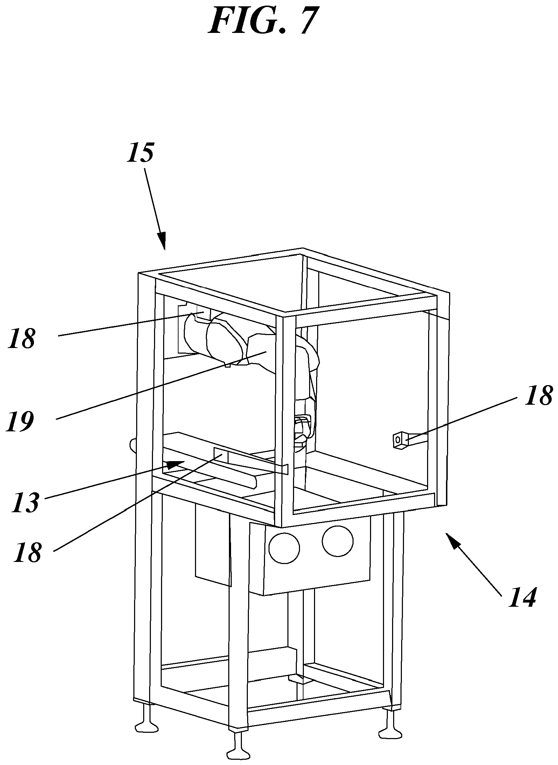

With reference to the partly schematic drawing figures 1-7 a basic idea of the present technology is also to suggest a test tube managing system 1 that basically includes a carrier infeed station 2 for carriers 6 carrying test tubes 7 containing samples of optional types. The type of samples handled is not specified here but may be any optional type for which the system would be appropriate, such as blood samples etc. taken in medical services, pharmaceutical samples or even water quality samples. Basically the system 1 may communicate with any appropriate known or future pneumatic pipe carrier transport system having at least one sample test tube collection or introduction station and in turn communicating with one or more of said carrier infeed stations 2. Each sample test tube collection station is thereby also normally a sampling location for transported test tube samples. The suggested system 1 also has a carrier handling station 4, a test tube managing station 5 and a carrier outfeed station 3. The carrier handling station 4 includes a carrier opening unit, a test tube removing unit and a carrier transfer and closing unit (likewise not shown). The test tube 7 managing station 5 includes a sample test tube 7 conveying unit 13 that separates the sample test tubes 7 slightly, a test tube identifying and analyzing station 14 and a test tube sorting and manipulating unit 15.

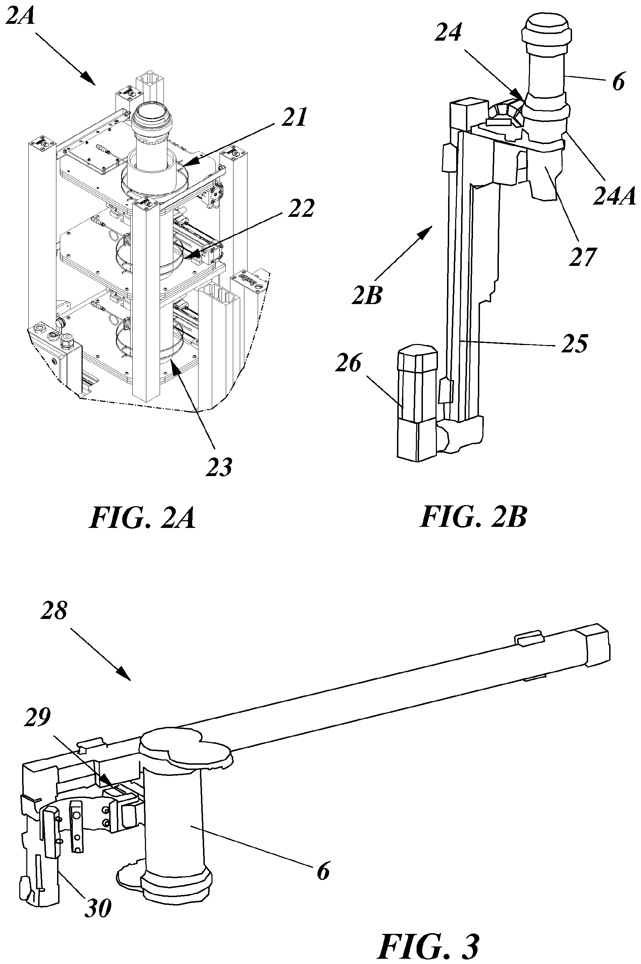

In a preferred embodiment the test tube managing system 1 is a fully automatic system, including the carrier infeed station 2 with separation for carriers 6, a carrier 6 emptying unit 30, a carrier transfer unit 28 and a carrier outfeed station 3 for delivering the carriers 6. With specific reference to Figs. 2A, 2B the or each carrier infeed station 2 consists of an upper section 2A having one fork carrier holder 21 and two air sluices 22, 23 placed on top of each other. The carrier infeed station 2 upper section 2A holds two carriers 6 and is able to separate carriers 6 and to drop single carriers down to a carrier rotation unit 24 (Fig. 2B). Sensors (not shown) placed on the side detects at which positions carriers 6 are held. The motion of fork carrier holder 21 and the air sluices 22, 23 is pneumatically controlled. When a carrier 6 arrives from the pneumatic tube system, a first air sluice 22 stops the carrier. The fork carrier holder 21 is open and closes when the carrier 6 has arrived at the first air sluice 22. Thus when the carrier 6 is detected the fork carrier holder 21 and the first air sluice 22 open so that the carrier 6 drops down to the second air sluice 23 and the first air sluice 22 is closed again. The fork carrier holder 21 is opened. Then the second air sluice 23 opens and the first carrier 6 is dropped down to the carrier rotation unit 24, which is then placed directly below the second air sluice 23. When a second carrier 6 arrives and the first carrier is still in the bottom position, the second carrier 6 stops at the first air sluice 22. When a third carrier 6 arrives, and there is already two carriers 6 waiting, the fork carrier holder 21 separates the second and the third carrier 6 from each other. Above the infeed station 2 the pneumatic tube system will have a sensor (not shown) so that when there is no carrier 6 in position the pneumatic tube system will call for a new carrier 6.

The carrier infeed station 2 further consists of a lower section 2B performing a carrier 6 rotation and consists of a vertical linear unit 25, driven by a servo motor 26. On the linear unit 25 a carrier rotation unit 24 is placed, consisting of a plate having a central vacuum suction cup 24A. The rotation is caused by a servo motor 27. On the side of the vacuum suction cup 24A there is a sensor (not shown) for finding a hinge of the carriers 6. When there is a carrier 6 present to be received the vertical linear unit 25 is moved to a position below the upper section of the carrier infeed station 2A, the carrier 6 is dropped to the vacuum suction cup of the carrier rotation unit 24, and vacuum is applied to fix the carrier 6. The vertical linear unit 25 is moved to a hinge sensor position and rotation starts. When the hinge sensor finds the hinge, rotation is stopped. Then starts a motion down to a gripper position (not shown). If the carrier 6 is to be rejected the system stops and an operator removes the carrier 6.

A horizontal carrier 6 transfer will be briefly described with reference to Fig. 3. This transfer is performed with a linear carrier transfer unit 28 driven by servo motor 30. The carrier transfer unit 28 is equipped with a pneumatic carrier gripper 29. The carrier gripper 29 holds the carrier 6 in a firm grip while passing through a lid opener, to an emptying position and to a lid closing position (none of them disclosed). Arriving at a right end of the linear carrier transfer unit 28 the carrier 6 is placed on a lower plate of a carrier outfeed station 3 and released by the carrier gripper 29.

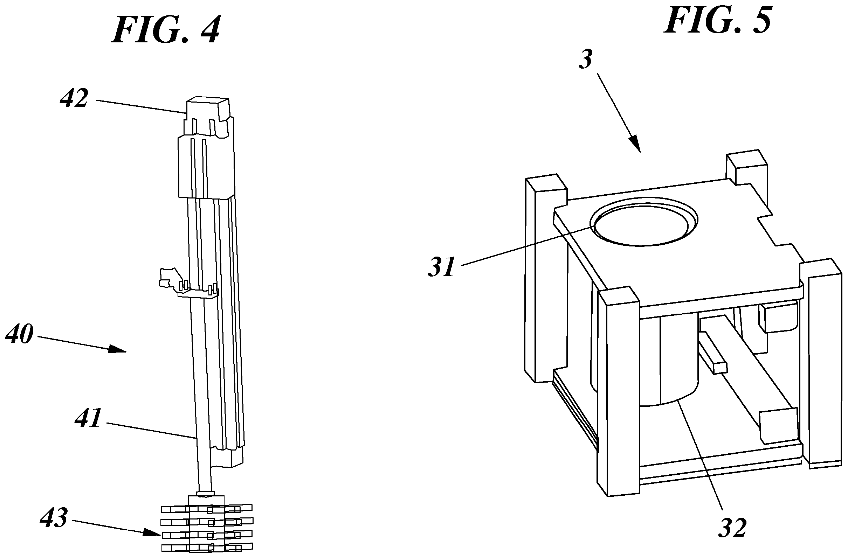

In the emptying position is provided an emptying unit 40 (see Fig. 4) that consists of a vertical linear unit 41, driven by a servo motor 42. A finger tool 43 is mounted on the carrier transfer unit 28 and is moved in steps through the carriers 6, thus slowly pressing sample test tubes 7 out from the carriers 6. If the force applied by the servo motor 42 exceeds a set upper limit the servo motor 42 retracts the motion and the system 1 stops. An operator is then requested to check the carrier 6. The content emptied from carriers 6, namely the sample test tubes 7, will then be transported by the sample test tube conveying unit 13 to the test tube identifying and analyzing station 14 and test tube sorting and manipulating unit 15 for further processing, as will be described more specifically further below.

As was briefly indicated above the emptied carriers 6 will be transferred to and handled by the carrier outfeed 3 station, an upper section of which is schematically illustrated in Fig.5. When the pneumatic carrier gripper 29 of the horizontal carrier transfer has delivered a carrier 6 to the outfeed position, the carrier 6 is moved up into the carrier outfeed station 3 by a unit that includes a vertical linear cylinder, a servo motor and a vacuum suction cup. Said unit is not disclosed nor described in detail since it does both functionally and with regard to its configuration correspond to the lower section of the carrier infeed station 2. As a carrier 6 is locked by a fork gate 31 in the carrier outfeed station 3 upper section the vacuum is turned off and a servo cylinder is returned. The carrier outfeed station 3 holds one carrier 6 and is able to receive carriers 6 and send them back into the pneumatic tube system. Sensors (not shown) on the side detect if there is a carrier 6 in the outfeed station 3. When a carrier 6 is to be sent from the carrier outfeed station 3 an air sluice 32 is opened. The carrier 6 is pushed up into the carrier outfeed station 3. When the carrier 6 is in top position a fork gate 31 is closed with the carrier 6 hanging in the fork gate 31. A carrier vertical pusher is lowered and the air sluice 32 is closed. When the air sluice 32 is closed the fork gate 31 opens and the outfeed station 3 is able to send the carrier into the pneumatic tube system. The motion for the fork gate 31 and the air sluice 32 is pneumatically controlled.

In the preferred embodiment the above mentioned sample test tube conveying unit 13 is a shake conveyor 13 (Fig. 6) with grooves 13A. The test tube conveying unit 13 receives individual sample test tubes 7 as they are removed from the carriers 6 and are then to be transferred to the test tube identifying and analyzing station 14. The test tube identifying and analyzing station 14 includes at least one vision analyze camera 18 for detecting dimensions of the sample test tubes 7 and of their caps 7A as well as for identification of e.g. markings, such as barcodes, of the test tubes 7. The sample test tube identifying and analyzing station 14 is connected to a Programmable Logic Controller (PLC, not shown) for evaluation of dimension detection scanning, test tube identification and analyzing. With this PLC is preferably associated an interface (HMI) consisting of an operating panel used for all communication between the system and the operators under normal conditions.

The test tube sorting and manipulating unit 15 includes an industrial robot 19 that is guided by vision and that includes a sample test tube gripper tool 20 for picking sample test tubes 7 from the shake conveyor 13. The test tube sorting and manipulating unit 15 either communicates identified, analyzed and accepted sample test tubes 7 to a laboratory automation test and analyzing location for test tube samples or communicates identified, analyzed and rejected sample test tubes 7 to a bin (not shown) for manual sample test tube 7 handling. Specifically, sample test tubes 7 with correct dimensions of test tube and test tube cap will first be picked by the industrial robot 19 and placed in test tube identifying and analyzing station 14 that will determine if the sample test tube 7 shall proceed directly to lab automation or not. The system 1 is preferably mounted next to a lab automation to be able to reach in and place sample test tubes 7 directly into lab automation carriers or to any container (Bulk loader) close by.

A presently preferred robot 19 handling sequence will be now be briefly described. The shake conveyor 13 is stopped and a sample test tube 7 is positioned by a first vision positioning camera 18 and gripped by the robot 19 sample test tube gripper tool 20. When the sample test tube 7 is lifted from the shake conveyor 13 the shake movement of the conveyor unit 13 starts again, provided that a second picking vision camera 18 decides that there is no sample test tube 7 available for a next pick. Based on the information from the second vision picking camera 18 the next step is decided. This step will be either to turn to the left or to the right, dependent on if the second vision picking camera 18 saw a barcode or not. Thereby, robot 19 moves the sample test tube 7 to a left or right camera. The picture of the camera 18 is analyzed and the result of the analysis is sent to the PLC for evaluation. If the evaluation results in an acceptance of the sample test tube 7 then the sample test tube 7 is dropped in a delivery position If, on the other hand the evaluation results in a rejection of the sample test tube 7 this is dropped at the end of the shake conveyor 13 for manual handling.

## Claims

1. A method of managing test tubes (7), wherein test tubes are transported in a pneumatic pipe system from a test tube sample sampling location where one or more test tubes containing samples are introduced (step S1) into a carrier (6) and are pneumatically transported (step S2) to a carrier infeed station (2) of a test tube managing system (1), the carrier is opened (step S3) at the carrier infeed station and test tube(s) are removed (step S4) from the carrier, test tube(s) are individually received on a test tube conveying unit (13) as they are removed from the carrier, each test tube is identified (step S6) according to a sample contained therein and/or a sampling location thereof, test tubes are sorted after identification and test tubes are manipulated (step S8) for further processing according to said sorting, **characterized by**:
- detecting dimensions (step S5) of each removed test tube; and
- sorting (step S7) test tubes also after the detected dimensions;
wherein said detecting of dimensions (step S5) first comprises detecting dimensions of the actual test tube (7) as well as dimensions of its designated cap (7A) and said sorting comprises moving a test tube and designated cap that are accepted by the dimension detecting to a test tube identification and analyzing unit (14).

2. A method according to claim 1, **characterized by** then identifying a marking on the test tube (7) and/or its cap (7A) in the test tube identification and analyzing unit (14) to determine how the test tube shall be manipulated for further processing.

3. A method according to claim 2, **characterized in that** a test tube (7) marking is chosen from any of the test tube cap (7A) color, the color of the top of the cap, the color at a bottom of the test tube, readability of a test tube barcode and/or the information on such a barcode.

4. A method according to any of claims 1-3, **characterized in that**:
- one or more test tubes containing samples are collected in a carrier (6) at a carrier loading station/test tube collection station,
- the carrier with test tube/-s is transported to a carrier infeed station (2) where the test tube/-s is/are ejected from the carrier and then moved by means of the conveyor (13) to a test tube identification and analyzing unit (14),
- the ejected sample test tubes are picked up from the conveyor by an industrial robot (19) guided by vision and scanned for dimensional detection in a test tube identification and analyzing station (14), where
- sample test tubes with correct dimensions are also analyzed with regard to markings,
- each sample test tube is identified and it is determined whether sample test tubes are to be forwarded directly to a laboratory automation test tube sample test and analyzing location or to a bin (16) for manual handling.

5. A test tube managing system (1) including an infeed station (2) for carriers (6) from a pneumatic pipe system, where said carriers carrying test tubes (7) containing samples and further comprising :
- a carrier handling station (4),
- a test tube managing station (5), and
- a carrier outfeed station (3), whereby
- the carrier handling station includes a carrier opening unit, a test tube removing unit and a carrier transporting and closing unit,
- the test tube managing station includes a sample test tube conveying unit (13) for receiving individual sample test tubes, a test tube identification and analyzing station (14) and a test tube sorting and manipulating unit (15),
- the test tube identification and analyzing station (14) includes at least one vision analyze camera (18) for analyzing identification markings of the test tubes (7) so as to identify each test tube according to a sample contained therein and/or a sampling location thereof;
**characterized in that**
the at least one vision analyze camera (18) is configured for additionally performing dimension scanning the test tubes (7), wherein dimension scanning comprises detecting dimensions of the actual test tube (7) as well as dimensions of its designated cap (7A); and wherein the test tube sorting and manipulating unit (15) communicates test tubes based on the identification markings and dimension scanning.

6. A test tube managing system according to claim 5, **characterized in that** the sample test tube conveying unit (13) is a shake conveyor with grooves (13A) receiving the individual sample test tubes (7).

7. A test tube managing system according to any of claims 5-6, **characterized in that** the test tube sorting and manipulating unit (15) includes an industrial robot (19) guided by vision and a gripper tool (20) for picking sample test tubes (7) from the shake conveyor (13).

8. A test tube managing system according to any of claims 5-7 and communicating with a pneumatic pipe carrier transport system having at least one sample test tube collection station and one or more of said carrier infeed stations (2), **characterized in that** one or each sample test tube collection station is also a sampling location for transported test tube (7) samples and that the test tube sorting and manipulating unit (15) communicates with a laboratory automation.

## Patentansprüche

1. Verfahren zur Handhabung von Reagenzgläsern (7), wobei Reagenzgläser in einem pneumatischen Leitungssystem von einer Probenahmestelle für Reagenzgläser transportiert werden, an der ein oder mehrere Reagenzgläser mit Proben in einen Träger (6) eingebracht werden (Schritt S1) und pneumatisch zu einer Trägerzuführstation (2) eines Reagenzglas-Verwaltungssystems (1) transportiert werden (Schritt S2), der Träger wird an der Trägerzuführstation geöffnet (Schritt S3) und Reagenzgläser werden aus dem Träger entnommen (Schritt S4), Reagenzgläser werden einzeln auf einer Reagenzglasfördereinheit (13) aufgenommen so wie sie vom Träger entfernt werden, jedes Reagenzglas wird anhand einer darin enthaltenen Probe und/oder einer Probenahmestelle davon identifiziert (Schritt S6), Reagenzgläser werden nach der Identifizierung sortiert und Reagenzgläser werden manipuliert (Schritt S8) zur weiteren Verarbeitung gemäß der Sortierung, **gekennzeichnet durch:**
- Erfassen der Abmessungen (Schritt S5) eines jeden entfernten Reagenzglases;
- Sortieren (Schritt S7) von Reagenzgläsern nach Abmessungen, wobei das Erfassen von Abmessungen (Schritt S5) zuerst das Erfassen von Abmessungen des tatsächlichen Reagenzglases (7), sowie Abmessungen seiner dazugehörigen Kappe (7 A) umfasst und die Sortierung das Bewegen eines Reagenzglases und dazugehörigen Kappe umfasst, die von der Dimensionserkennung der Reagenzglasidentifizierungs - und Analyseeinheit (14) akzeptiert werden.

2. Verfahren nach Anspruch 2, **gekennzeichnet durch** anschließendes Identifizieren einer Markierung auf dem Reagenzglas (7) und/oder seiner Kappe (7A) in der Reagenzglasidentifizierungs - und Analyseeinheit (14), um zu bestimmen, wie das Reagenzglas für die Weiterbearbeitung gehandhabt werden soll.

3. Verfahren nach Anspruch 2, **durch gekennzeichnet, dass** eine Markierung des Reagenzglases (7) aus einer der Farben der Reagenzglaskappe (7A), der Farbe der Oberseite der Kappe, der Farbe des Bodens des Reagenzglases, Lesbarkeit eines Reagenzglas-Barcodes und/oder die Informationen auf einem solchen Barcode ausgewählt wird.

4. Verfahren nach einem der Ansprüche 1 bis 3, **durch gekennzeichnet, dass:**
- ein oder mehrere Reagenzgläser mit Proben in einem Träger (6) an einer Trägerladestation/Reagenzglassammelstation gesammelt werden,
- der Träger mit dem Reagenzglas/ den Reagenzgläsern wird zu einer Trägerzuführstation (2) transportiert, wo das Reagenzglas/ die Reagenzgläser aus dem Träger ausgeworfen und dann mittels eines Förderers (13) zu einer Reagenzglasidentifizierungs - und Analyseeinheit (14) transportiert werden,
- die ausgeworfenen Reagenzgläser werden von einem visuell geführten Industrieroboter (19) vom Förderer aufgenommen und zur Dimensionserkennung in einer Reagenzglasidentifizierungs - und Analyseeinheit (14) abgetastet, wobei
- Reagenzgläser mit korrekten Abmessungen auch auf Markierungen analysiert werden,
- jedes Reagenzglas identifiziert wird und festgelegt wird, ob Reagenzgläser direkt an eine Laborautomatisierungs-Reagenzgläser-Probentest- und Analysestelle oder an einen Behälter (16) zur manuellen Handhabung weitergeleitet werden sollen.

5. Reagenzglas-Verwaltungssystem (1) mit einer Zuführstation (2) für Träger (6) von einem pneumatischen System, wobei die Träger Reagenzgläser (7) mit Proben tragen, und ferner umfassen:
- eine Trägerhandhabungsstation (4),
- eine Reagenzglasverwaltungsstation (5), und
- eine Trägerausgabestation (3), wobei
- die Trägerhandhabungsstation eine Trägeröffnungseinheit, eine Reagenzgas-Entfernungseinheit und eine Trägertransfer- und Schließeinheit umfasst;
- die Reagenzglas-Verwaltungsstation beinhaltet eine Reagenzglasfördereinheit (13), eine Reagenzglasidentifizierungs- und Analysestation (14) und eine Reagenzglassortier- und Manipulationseinheit (15),
- die Reagenzglasidentifizierungs- und Analysestation (14) beinhaltet mindestens eine visuelle Analysekamera (18) zum Analysieren von Identifikationsmarkierungen der Reagenzgläser (7), um jedes Reagenzglas entsprechend einer darin enthaltenen Probe und/oder einer Probenahmestelle davon zu identifizieren;
**dadurch gekennzeichnet, dass**
die mindestens eine visuelle Analysekamera (18) dazu konfiguriert ist, zusätzlich Abmessungsabtastungen der Reagenzgläser (7) durchzuführen, wobei Abmessungsabtastungen das Erfassen von Abmessungen der Dimensionsscannen der Reagenzgläser (7), wobei Dimensionsscannen das Erfassen der Abmessungen des tatsächlichen Reagenzglases (7) sowie Abmessungen seiner dazugehörigen Kappe (7 A) umfassen; und wobei die Reagenzglassortier- und Manipulationseinheit (15) Reagenzgläser basierend auf den Identifikationsmarkierungen und der Abmessungsabtastung kommuniziert.

6. Reagenzglas-Verwaltungssystem (1) nach Anspruch 6, **dadurch gekennzeichnet, dass** die Reagenzglasfördereinheit (13) ein Schüttelförderer mit Rillen (13A) ist, die einzelne Reagenzgläser (7) aufnehmen.

7. Reagenzglas-Verwaltungssystem (1) nach einem der Ansprüche 5 bis 6, **dadurch gekennzeichnet, dass** die Reagenzglassortier- und Manipulationseinheit (15) einen visuell geführten Industrieroboter (19) und ein Greifwerkzeug (20) zum Aufnehmen von Reagenzgläsern (7) vom Schüttelförderer (13) beinhaltet.

8. Reagenzglas-Verwaltungssystem (1) nach einem der Ansprüche 5 bis 7 und in Verbindung mit einem pneumatischen Rohrträgertransportsystem mit mindestens einer Reagenzglassammelstation und einer oder mehreren der Trägerzuführstationen (2), **dadurch gekennzeichnet, dass** eine oder jede Reagenzglassammelstation auch eine Probenahmestelle für transportierte Reagenzgläser (7) ist und dass die Reagenzglassortier- und Manipulationseinheit (15) mit einer Laborautomatisierung kommuniziert.

## Revendications

1. Procédé de gestion de tubes à essai (7), dans lequel les tubes à essai sont transportés dans un système de tube pneumatique à partir d'un emplacement d'échantillonnage d'échantillon de tube à essai où un ou plusieurs tubes à essai contenant des échantillons sont introduits (étape S1) dans un transporteur (6) et sont transportés pneumatiquement (étape S2) vers une station d'alimentation de transporteur (2) d'un système de gestion de tubes à essai (1), le transporteur est ouvert (étape S3) à la station d'alimentation de transporteur et le ou les tubes à essai sont retirés (étape S4) du transporteur, le ou les tubes à essai sont reçus individuellement sur une unité de convoyeur de tubes à essai (13) lorsqu'ils sont retirés du transporteur, chaque tube à essai est identifié (étape S6) en fonction d'un échantillon contenu dans celui-ci et/ou d'un emplacement d'échantillonnage de celui-ci, les tubes à essai sont triés selon identification et les tubes à essai sont manipulés (étape S8) pour un traitement ultérieur selon ledit tri, **caractérisé par** :
- la détection des dimensions (étape S5) de chaque tube à essai retiré ; et
- le triage (étape S7) des tubes à essai également selon les dimensions détectées ;
dans lequel ladite détection de dimensions (étape S5) comprend d'abord la détection des dimensions du tube à essai lui-même (7) ainsi que les dimensions de son capuchon désigné (7A) et ledit tri comprend le déplacement d'un tube à essai et d'un capuchon désigné qui sont acceptés par le détecteur de dimension vers une unité d'identification et d'analyse de tube à essai (14).

2. Procédé selon la revendication 1, **caractérisé par** l'identification d'un marquage sur le tube à essai (7) et/ou son capuchon (7A) dans l'unité d'identification et d'analyse de tube à essai (14) pour déterminer comment le tube à essai doit être manipulé pour traitement ultérieur.

3. Procédé selon la revendication 2, **caractérisé en ce qu'**un marquage de tube à essai (7) est choisi parmi l'une quelconque de la couleur du capuchon du tube à essai (7A), la couleur du haut du capuchon, la couleur au fond du tube à essai, la lisibilité d'un code-barres de tube à essai et/ou les informations sur un tel code-barres.

4. Procédé selon l'une quelconque des revendications 1 à 3, **caractérisé en ce que** :
un ou plusieurs tubes à essai contenant des échantillons sont collectés dans un transporteur (6) à une station de chargement de transporteur/station de collecte de tubes à essai,
le transporteur avec tube(s) à essai est transporté jusqu'à une station d'alimentation de transporteur (2) où le(s) tube(s) à essai est/sont éjecté(s) du transporteur puis déplacé(s) au moyen du convoyeur (13) vers une unité d'identification et d'analyse de tube à essai (14),
les tubes à essai d'échantillon éjectés sont prélevés du convoyeur par un robot industriel (19) guidé par vision et scannés pour une détection dimensionnelle dans une station d'identification et d'analyse de tube à essai (14), où
les tubes à essai d'échantillon aux dimensions correctes sont également analysés en ce qui concerne les marquages,
chaque tube à essai d'échantillon est identifié et il est déterminé si les tubes à essai d'échantillon doivent être envoyés directement à un emplacement d'automatisation de laboratoire de test et d'analyse d'échantillon de tube à essai ou à un bac (16) pour une manipulation manuelle.

5. Système de gestion de tubes à essai (1) comprenant une station d'alimentation (2) pour des transporteurs (6) d'un système de tube pneumatique, où lesdits transporteurs transportant des tubes à essai (7) contenant des échantillons et comprenant en outre :
- une station de manipulation de transporteur (4),
- une station de gestion de tube à essai (5), et
- une station de sortie de transporteur (3), dans lequel
- la station de manipulation de transporteur comprend une unité d'ouverture de transporteur, une unité de retrait de tube à essai et une unité de transport et de fermeture de transporteur,
- la station de gestion de tube à essai comprend une unité de convoyeur de tube à essai d'échantillons (13) pour recevoir des tubes à essai d'échantillons individuels, une station d'identification et d'analyse de tube à essai (14) et une unité de tri et de manipulation de tubes à essai (15),
- la station d'identification et d'analyse de tube à essai (14) comprend au moins une caméra d'analyse de vision (18) pour analyser des marquages d'identification de tube à essai de manière à identifier chaque tube à essai en fonction d'un échantillon contenu dans celui-ci et/ou d'un emplacement d'échantillonnage de celui-ci ;
**caractérisé en ce que**
l'au moins une caméra d'analyse de vision (18) est configurée pour effectuer en outre un scan dimensionnel des tubes à essai (7), dans lequel le scan dimensionnel comprend la détection des dimensions du tube à essai lui-même (7) ainsi que les dimensions de son capuchon désigné (7A) ; et dans lequel l'unité de tri et de manipulation de tubes à essai (15) communique des tubes à essai sur la base des marques d'identification et du scan dimensionnel.

6. Système de gestion de tubes à essai selon la revendication 5, **caractérisé en ce que** l'unité de convoyeur de tubes à essai d'échantillons (13) est un convoyeur à secousses avec des rainures (13A) recevant les tubes à essai d'échantillons individuels (7).

7. Système de gestion de tubes à essai selon l'une quelconque des revendications 5 à 6, **caractérisé en ce que** l'unité de tri et de manipulation de tubes à essai (15) comprend un robot industriel (19) guidé par vision et un outil de préhension (20) pour prélever des tubes à essai d'échantillons (7) du convoyeur à secousses (13).

8. Système de gestion de tubes à essai selon l'une quelconque des revendications 5 à 7 et communiquant avec un système de tube pneumatique de transport de transporteur ayant au moins une station de collecte de tubes à essai d'échantillon et une ou plusieurs desdites stations d'alimentation de transporteur (2), **caractérisé en ce qu'**une ou chaque station de collecte de tubes à essai d'échantillons est également un emplacement d'échantillonnage pour les tubes à essai (7) d'échantillons transportés et que l'unité de tri et de manipulation de tubes à essai (15) communique avec une automatisation de laboratoire.
